# EUROPÄISCHE PATENTSCHRIFT

(11) **EP 1 180 475 B1**
(45) Veröffentlichungstag und Bekanntmachung des Hinweises auf die Patenterteilung: **21.09.2005**
(21) Anmeldenummer: 01115618.9
(22) Anmeldetag: 03.07.2001
(51) Int. Cl.: B62H 5/00, B62H 1/02

(54) **Wegfahrsperre für Motorräder mit Seitenstütze**
Immobilizer for motorcycle with lateral support
Dispositif d'immobilisation pour motocyclette avec support latéral

(30) Priorität: 10.08.2000 DE 10039021
(43) Veröffentlichungstag der Anmeldung: 20.02.2002
(73) Patentinhaber: Bayerische Motoren Werke Aktiengesellschaft, 80809 München (DE)
(72) Erfinder: Strasser, Ralf, 80336 München (DE)

(56) Entgegenhaltungen:
- DE-U- 7 328 256
- FR-A- 2 260 488
- FR-A- 2 554 072
- US-A- 3 908 780
- US-A- 4 016 538
- US-A- 4 444 407

## Beschreibung

Die Erfindung betrifft ein Motorrad mit Seitenstütze und Wegfahrsperre, umfassend einen am Fahrzeug angebrachten Sensor mit geradlinig geführtem Wegaufnehmer und ein mit der schwenkbaren Seitenstütze starr verbundenes Steuerbauteil, das an einem zur Drehachse der Seitenstütze exzentrischen Ort mit dem Wegaufnehmer des Sensors verbunden ist, wobei der Sensor in der aktivierten Schwenkstellung der Seitenstütze ein Signal an das elektrische bzw. elektronische Motormanagement abgibt, das ein Wegfahren des Motorrades verhindert.

Es sind bereits Motorräder mit Seitenstütze und Wegfahrsperre dieser Gattung bekannt, bei denen der Sensor als Linearschalter ausgebildet ist, der in den Stromkreis für das Motormanagement gelegt ist. Wenn die Seitenstütze vom Fahrer oder der Fahrerin des Motorrades nach oben in die unwirksame Stellung verschwenkt wird, dann wird der Wegaufnehmer, in diesem Fall ein Schaltstift, gegen die Vorspannkraft einer zugeordneten Druckfeder relativ zum Gehäuse des Schalters linear verschoben, um den Schalter zu betätigen und den Stromkreis zu schließen. Wenn die Seitenstütze in die wirksame Stellung nach unten verschwenkt wird, dann kann der Schaltstift unter der Vorspannkraft der Feder verschoben werden, so dass der Schalter betätigt und der Stromkreis geöffnet wird. Der Stromkreis kann so ausgebildet sein, dass entweder der Motor überhaupt nicht gestartet werden kann, oder dass zwar der Motor gestartet werden kann, dass aber der Zündstromkreis unterbrochen wird, wenn versucht wird, einen Gang einzulegen und die Kupplung zu schließen. Diese bekannte Wegfahrsperre ist mit dem Nachteil behaftet, dass der Wegaufnehmer, d. h. der Schaltstift durch Verunreinigungen blockieren kann. Beim Hochschwenken der Seitenstütze in die unwirksame Stellung wird der Schaltstift zwangsweise in seine Schließstellung gedrückt. Wenn die Seitenstütze zu einem späteren Zeitpunkt in ihre wirksame Stellung nach unten verschwenkt wird, dann bleibt der Schaltstift wegen der erhöhten Reibung in der Schließstellung, in der ein Starten und Wegfahren des Motorrades möglich ist. Die Wegfahrsperre ist daher wirkungslos.

Aus der DE 73 28 256 U, die alle Merkmale des Oberbegriffs von Anspruch 1 zeigt, ist es auch bereits bekannt, bei einem gattungsgemäßen Motorrad den Schaltstift über eine Zugfeder mit dem an der Seitenstütze befestigten Steuerbauteil, nämlich einem Bolzen, zu verbinden. Beim Verschwenken der Seitenstütze in die unwirksame Stellung wird von der Zugfeder auf den Schaltstift eine Kraft ausgeübt, um diesen gegen die Kraft der zugeordneten Feder in die Stellung zum Schließen des Zündstromkreises zu bewegen. Diese Zugfeder ermöglicht den Ausgleich von Toleranzen, so dass der Weg des Steuerbauteils größer sein kann als der Weg des Schaltstiftes. Aber auch diese Wegfahrsperre ist hinsichtlich der Sicherheit gegen Fehlbedienungen unbefriedigend. Wenn die Reibung des Schaltstiftes in dem Schaltergehäuse als Folge von Verunreinigungen oder Korrosion die Vorspannkraft der zugeordneten Feder übersteigt, dann bleibt der Schaltstift beim Verschwenken der Seitenstütze in die wirksame Stellung in der Schließstellung. Die Wegfahrsperre ist somit wirkungslos.

Der Erfindung liegt die Aufgabe zugrunde, das gattungsgemäße Motorrad hinsichtlich der Betriebssicherheit der Wegfahrsperre zu verbessern.

Die Lösung dieser Aufgabe ist im Patentanspruch 1 angegeben. Dadurch, dass das Steuerbauteil mit dem Wegaufnehmer des Sensors über eine Zwangsführung verbunden ist, ist gewährleistet, dass der Wegaufnehmer von der einen Endstellung in die andere bewegt wird, wenn die Seitenstütze in die wirksame Stellung nach unten geschwenkt wird. Damit kann zuverlässig verhindert werden, daß der Fahrer oder die Fahrerin das Motorrad in Gang setzt, solange sich die Seitenstütze nicht in der nach oben geschwenkten unwirksamen Stellung befindet.

Der Grundgedanke der Erfindung kann in der Weise verwirklicht werden, daß der Sensor mit dem Fahrzeug schwenkbar verbunden ist und daß der Wegaufnehmer des Sensors mit dem Steuerbauteil der Seitenstütze gelenkig verbunden ist.

Es ist aber auch andere kinematische Ausgestaltung möglich, die darin besteht, daß der Sensor am Fahrzeug starr befestigt ist, und daß der Wegaufnehmer des Sensors mit einer Steuerkurve des Steuerbauteils gekuppelt ist. In diesem Fall hat der Wegaufnehmer vorzugsweise am freien Ende einen Stift, der in einem Steuerschlitz des Steuerbauteils geführt ist.

Bei allen vorstehend genannten Ausführungsformen der Erfindung kann der Sensor als Linearschalter ausgebildet sein, der in den Stromkreis für das Motormanagement gelegt ist. Ein solcher Linearschalter ist ein Standardbauteil, das im Handel kostengünstig erhältlich ist.

Zwei Ausführungsbeispiele der Erfindung sind in den Zeichnungen dargestellt und werden nachfolgend näher erläutert. Es zeigt:
Fig. 1 eine schematische Darstellung einer ersten Ausführungsform einer Wegfahrsperre für Motorräder, wobei eine Seitenstütze in die unwirksame Stellung nach oben geschwenkt ist,
Fig. 2 eine Darstellung ähnlich wie Fig. 2, wobei die Seitenstütze in die wirksame Stellung nach unten geschwenkt ist, und
Fig. 3 eine schematische Darstellung einer zweiten Ausführungsform einer Wegfahrsperre, wobei nur eine Nabe der Seitenstütze gezeigt ist.

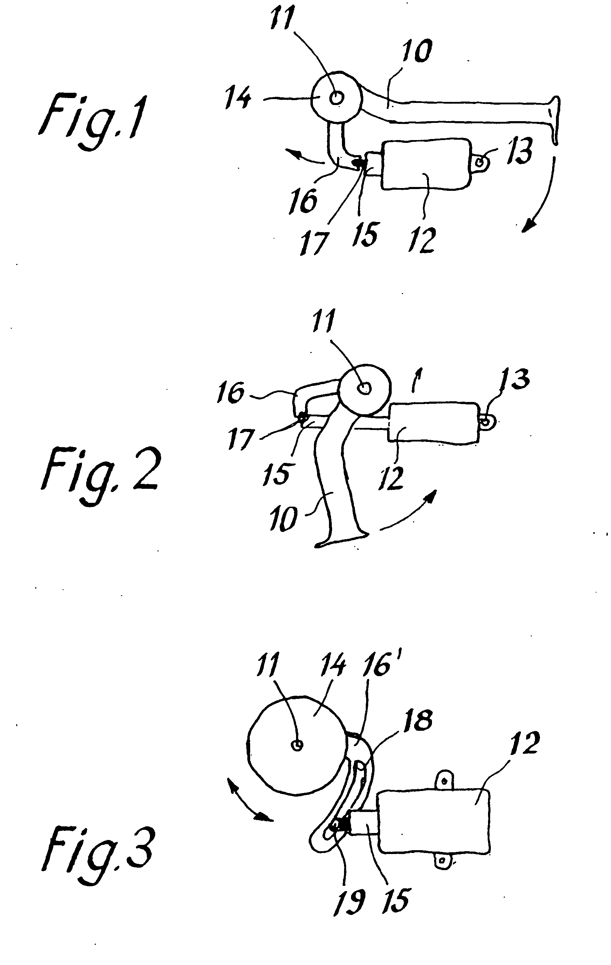

Eine in Fig. 1 schematisch dargestellte Seitenstütze 10 eines Motorrades ist mit dem (nicht gezeigten) Rahmen um eine näherungsweise horizontale Achse 11 schwenkbar verbunden. Ein als Linearschalter ausgebildeter Sensor 12 ist mit dem Rahmen des Motorrades um eine zur Drehachse 11 im Abstand parallel angeordnete Drehachse 13 schwenkbar verbunden. In dem Sensor 12 ist ein Wegaufnehmer 15 linear beweglich gelagert. Da der Sensor im vorliegenden Fall als Linearschalter ausgebildet ist, wird der Wegaufnehmer nachfolgend als Schaltstift bezeichnet. Nachdem ein solcher Linearschalter allgemein bekannt ist, kann auf eine nähere Erläuterung der konstruktiven Einzelheiten verzichtet werden. Der Schaltstift 15 liegt gleitend an einer Leiterbahn an, und es wird ein elektrisches Signal erzeugt, wenn sich der Wegaufnehmer 15 in seiner in Fig. 1 gezeigten rechten Endstellung befindet. Mit einer Nabe 14 der Seitenstütze 10 ist ein auslegerartiges Steuerbauteil 16 starr verbunden oder einstückig ausgebildet. Die freien Enden des Steuerbauteils 16 und des Schaltstiftes 15 sind durch ein Gelenk 17 mit einer zu den Drehachsen 11 und 13 parallelen Achse verbunden. Es ist erkennbar, daß diese Anordnung ein Gelenkviereck mit drei Drehpaaren und einem Schieberpaar bildet, das auch als Kurbelschleife bezeichnet wird.

Wenn die Seitenstütze 10 aus der in Fig. 1 gezeigten unwirksamen Stellung nach unten in die in Fig. 2 gezeigte wirksame Stellung verschwenkt wird, dann wird der Schaltstift 15 zwangsweise aus dem Linearschalter 12 herausgezogen, und der elektrische Kontakt wird unterbrochen. Der Linearschalter 12 kann in den Zündstromkreis des Motorrades gelegt sein. Wenn die Seitenstütze 10 in die wirksame Stellung nach unten verschwenkt wird, dann wird der Zündstromkreis zwangsläufig unterbrochen, so daß der Motor nicht gestartet werden kann. Es ist aber auch möglich, einen mit dem Kupplungsgriff betätigbaren zusätzlichen elektrischen Schalter zu dem Linearschalter 12 parallel anzuordnen. In diesem Fall kann der Motor zwar gestartet werden, obgleich sich die Seitenstütze 10 in der wirksamen Stellung befindet, der Zündstromkreis wird aber automatisch unterbrochen, sobald der Fahrer oder die Fahrerin versucht, die Kupplung zu betätigen.

Der mit der Seitenstütze 10 zwangsweise gekuppelte Linearschalter 12 bildet eine Wegfahrsperre, die zuverlässig verhindert, den Motor zu starten oder bei laufendem Motor die Kupplung zu betätigen, solange sich die Seitenstütze 10 in der wirksamen Stellung befindet.

In Fig. 3 der Zeichnung ist eine kinematische Abwandlung der Wegfahrsperre dargestellt. Im Gegensatz zu der in den Fig. 1 und 2 gezeigten Ausführungsform ist der Linearschalter 12 am Rahmen des Motorrades starr befestigt. In dem mit der Nabe 14 der Seitenstütze 10 fest verbundenen Steuerbauteil 16 ist ein Steuerkurvenschlitz 18 ausgebildet. Der Schaltstift 15 des Linearschalters 12 ist an seinem freien Ende mit einem Stift 19 versehen, der in den Steuerkurvenschlitz 18 des Steuerbauteils 16'eingreift. Wie aus Fig. 3 hervorgeht, hat der Steuerkurvenschlitz 18 einen veränderlichen Abstand zur Drehachse 11 der Nabe 14. Wenn die Seitenstütze 10 und damit die Nabe 14 aus der in Fig. 3 gezeigten Ruhestellung im Uhrzeigersinn in die wirksame Stellung der Seitenstütze verschwenkt wird, dann gleitet der Stift 19 im Steuerkurvenschlitz 18 des Steuerbauteils 16'. Der Steuerkurvenschlitz 18 hat eine solche Form, daß der Schaltstift 15 ähnlich wie bei der ersten Ausführungsform zwangsweise eine Linearbewegung gegenüber dem Linearschalter 12 ausführt. Wegen der Exzentrizität des Steuerkurvenschlitzes 18 kann diese Linearbewegung des Schaltstiftes 15 wesentlich größer sein als der für den eigentlichen Schaltvorgang erforderliche Hub. Dieser Umstand ermöglicht große Toleranzen. Wegen der Zwangsführung des Stiftes 19 im Steuerkurvenschlitz 18 zeichnet sich die Ausführungsform nach Fig. 3 ebenfalls durch eine hohe Betriebssicherheit aus.

### Bezugszeichenliste

- 10: Seitenstütze
- 11: Drehachse von 10
- 12: Sensor bzw. Linearschalter
- 13: Drehachse von 12
- 14: Nabe von 10
- 15: Wegaufnehmer bzw. Schaltstift
- 16, 16': Steuerbauteil
- 17: Gelenk
- 18: Steuerkurvenschlitz
- 19: Stift

## Patentansprüche

1. Motorrad mit Seitenstütze und Wegfahrsperre, umfassend einen am Fahrzeug angebrachten Sensor mit geradlinig geführtem Wegaufnehmer und ein mit der schwenkbaren Seitenstütze starr verbundenes Steuerbauteil, das an einem zur Drehachse der Seitenstütze exzentrischen Ort mit dem Wegaufnehmer des Sensors verbunden ist, wobei der Sensor in der aktivierten Schwenkstellung der Seitenstütze ein Signal an das elektrische bzw. elektronische Motormanagement abgibt, das ein Wegfahren des Motorrades verhindert, **dadurch gekennzeichnet, dass** das Steuerbauteil (16; 16') mit dem Wegaufnehmer (15) des Sensors (12) über eine Zwangsführung (17; 18, 19) verbunden ist.

2. Motorrad nach Anspruch 1, **dadurch gekennzeichnet, dass** der Sensor (12) mit dem Fahrzeug schwenkbar verbunden ist, und dass der Wegaufnehmer (15) des Sensors mit dem Steuerbauteil (16) der Seitenstütze (10) durch ein Gelenk (17) verbunden ist.

3. Motorrad nach Anspruch 1, **dadurch gekennzeichnet, dass** der Sensor (12) am Fahrzeug starr befestigt ist, und dass der Wegaufnehmer (15) des Sensors mit einer Steuerkurve (18) des Steuerbauteils (16') gekuppelt ist.

4. Motorrad nach Anspruch 3, **dadurch gekennzeichnet, dass** der Wegaufnehmer (15) am freien Ende einen Stift (19) aufweist, der in einem Steuerkurvenschlitz (18) des Steuerbauteils (16') geführt ist.

5. Motorrad nach einem der vorhergehenden Ansprüche, **dadurch gekennzeichnet, dass** der Sensor (12) als Linearschalter ausgebildet ist, der in den Stromkreis für das Motormanagement gelegt ist.

## Claims

1. A motorcycle with a lateral support and an immobilizer, comprising a sensor attached to the vehicle and with a motion pick-up guided in a straight line and also comprising a control component rigidly connected to the pivotable lateral support and connected to the motion pick-up of the sensor at an eccentric place relative to the axis of rotation of the lateral support, wherein the sensor, when the lateral support is pivoted into the activated position, delivers a signal to the electric or electronic engine management so as to prevent the motorcycle starting off, **characterised in that** the control component (16; 16') is connected to the motion pick-up (15) of the sensor (12) by a restraining means (17; 18, 19).

2. A motorcycle according to claim 1, **characterised in that** the sensor (12) is pivotably connected to the vehicle and the motion pick-up (15) of the sensor is connected to the control component (16) of the lateral support (10) by a joint (17).

3. A motorcycle according to claim 1, **characterised in that** the sensor (12) is rigidly fixed to the vehicle and the motion pick-up (15) of the sensor is coupled to a control curve (18) of the control component (16').

4. A motorcycle according to claim 3, **characterised in that** the motion pick-up (15) at its free end has a pin (19) which is guided in a control curve or slot (18) in the control component (16').

5. A motorcycle according to any of the preceding claims, **characterised in that** the sensor (12) is a linear switch in the engine management circuit.

## Revendications

1. Motocyclette avec béquille latérale et dispositif d'immobilisation, comprenant un capteur monté sur le véhicule et doté d'un détecteur de position guidé de façon rectiligne et d'un élément de commande relié d'une part fixement à la béquille latérale pivotante, et d'autre part au détecteur de position du capteur en un point excentré par rapport à l'axe de rotation de la béquille latérale, le capteur émettant dans la position de pivotement active de la béquille latérale un signal vers le gestionnaire de moteur électrique ou électronique, qui empêche le départ de la motocyclette,
**caractérisée en ce que**
l'élément de commande (16 ; 16') est relié au détecteur de position (15) du capteur (12) par l'intermédiaire d'un guidage forcé (17 ; 18, 19).

2. Motocyclette selon la revendication 1,
**caractérisée en ce que**
le capteur (12) est relié de façon pivotante au véhicule, et le détecteur de position (15) du capteur est relié à l'élément de commande (16) de la béquille latérale (10) par l'intermédiaire d'une articulation (17).

3. Motocyclette selon la revendication 1,
**caractérisée en ce que**
le capteur (12) est relié fixement au véhicule, et le détecteur de position (15) du capteur est couplé à une came de commande (18) de l'élément de commande (16').

4. Motocyclette selon la revendication 3,
**caractérisée en ce que**
le détecteur de position (15) présente à son extrémité libre une tige (19) guidée dans une fente de came de commande (18) de l'élément de commande (16').

5. Motocyclette selon l'une des revendications précédentes,
**caractérisée en ce que**
le capteur (12) est configuré sous la forme d'un commutateur linéaire introduit dans le circuit électrique du gestionnaire de moteur.
